# EUROPEAN PATENT APPLICATION

(11) **EP 4 484 398 A1**
(43) Date of publication of application: **01.01.2025**
(21) Application number: 23182414.5
(22) Date of filing: 29.06.2023
(51) Int. Cl.: C04B 28/00, C04B 18/04, C04B 18/14, C04B 111/00

(54) **GEOPOLYMER COMPOSITIONS COMPRISING ALUMINUM SLUDGE AND USE THEREOF**

(30) Priority: 26.06.2023 PT 2023118752
(71) Applicant: Instituto Politécnico De Leiria, 2411-901 Leiria (PT)
(72) Inventor: SILVA, ALANA DA, MARINHA GRANDE (PT); BEM D'EÇA PEIXINHO, ANA DO, MARINHA GRANDE (PT); MENDES GASPAR, FLORINDO JOSÉ, MARINHA GRANDE (PT); SIQUEIRA DE ALMEIDA ARCHER DE CARVALHO, TOMÁS MARIA, MARINHA GRANDE (PT)
(74) Representative: Pereira da Cruz, Joao

(57) **Abstract**

The present disclosure is directed to geopolymer compositions comprising fly ash, metakaolin, an alkali metal silicate, and an alkali metal hydroxide, and from 2% to 40% weight per weight (w/w), preferably from 2% to 10% (w/w) of an aluminum sludge, wherein the fly ash is preferably from biomass, and composite material comprising thereof. Further, use of compositions and composite materials in construction sector, automotive industry, packaging industry, ceramics, or any combination thereof, preferably in coatings, are also provided.

## Description

### FIELD OF THE INVENTION

The present disclosure relates generally to geopolymer compositions comprising aluminum waste and use thereof, e.g in construction sector, patircularly in coatings and low-density materials.

### BACKGROUND OF THE INVENTION

In the current global scenario and in the face of climate and energy conditions, the construction sector, which is responsible for a large part of the consumption of natural resources, energy and water, and for generating a large amount of greenhouse gases, has been increasingly pressured to develop alternative materials and more efficient and sustainable building systems.

Energy consumption for industrialized manufacture of building materials is very high, so the use of materials that require less energy in their production process is an alternative to reduce the impact that the high energy demand of this sector causes on the environment. Therefore, traditional building materials may be replaced by materials wholly or partially from renewable sources.

Aluminum is a material known for its strength, lightweight nature, and corrosion resistance. Aluminum waste, such as dross or sludge, contains a considerable amount of recoverable aluminum, allowing for the recycling and reintegration of this valuable metal.

By using aluminum waste as a raw material, the reliance on primary aluminum production, which requires vast amounts of energy and natural resources can be reduced. The efficient utilization of aluminum waste not only conserves resources but also minimizes the environmental impact associated with aluminum extraction and processing.

As environmental sustainability becomes increasingly important, there is a need to for the development of new materials, particularly construction materials based on waste such as aluminum waste generated during metallurgical processes.

Patent KR20160129251A discloses a complex Hauyne-based cement composition containing calcium aluminate using waste aluminum dust; and to a manufacturing method thereof.

Patent US9580356B2 discloses a self-foaming geopolymer composition comprising at least one hydraulic binder; at least one binder selected from latent hydraulic binders, pozzolanic binders, and mixtures thereof; at least one alkaline activator; and aluminum dross.

### SUMMARY OF THE INVENTION

In one aspect of the disclosure, there is provided a geopolymer composition comprising fly ash, metakaolin, an alkali metal silicate, and an alkali metal hydroxide, and from 2% to 40% weight per weight (w/w), preferably from 2% to 10% (w/w) of an aluminum sludge, wherein the fly as is preferably from biomass.

In some embodiments, the aluminum sludge comprises from 10% to 45% (w/w) of a polymer, preferably a polyester and from 55% to 90% (w/w) of aluminum.

In some embodiments, the geopolymer composition comprises from 10% to 40% (w/w), preferably from 10% to 30% (w/w) of fly ash; from 2% to 20% (w/w), preferably from 10% to 20% (w/w) of metakaolin; from 5% to 30% (w/w), preferably from 10% to 30% (w/w) of an alkali metal silicate; and from 15% to 30% (w/w), preferably from 20% to 30% (w/w) of an alkali metal hydroxide.

In some embodiments, the geopolymer composition comprises from 5% to 20% (w/w), preferably from 6% to 15% (w/w) of water.

In some embodiments, the alkali metal silicate comprises an alkali metal selected from the group consisting of Na, K, Li, and any combination thereof, preferably Na, and the alkali metal hydroxide is selected from the group consisting of NaOH, KOH, LiOH, and any combination thereof, preferably NaOH.

In some embodiments, the geopolymer composition further comprises from 5% to 20% (w/w) of a waste material, wherein the waste material comprises rice husk, giant reed fiber, sugarcane, pine, pine needle, straw, moss, flax, coconut fiber, residues from wood processing, or any combination thereof.

In another aspect of the disclosure, there is provided a composite material comprising the geopolymer composition according to the present disclosure, wherein the geopolymer is a dehydrated geopolymer.

In some embodiments, the composite material has a porosity from 20% to 50% of the total volume.

In some embodiments, the composite material has a thermal conductivity from 0.09 W/mK to 0.2 W/mK.

In some embodiments, the composite material has a physical density from 0.4 g/cm³ to 0.9 g/cm³.

In another aspect of the disclosure, there is provided a plate comprising the composite material according to the present disclosure, wherein the plate has a length from 305 mm to 295 mm, a width from 305 mm to 295 mm and a thickness from 3.5 mm to 2.5 mm.

In another aspect of the disclosure, there is provided a method for obtaining a composite according to the present disclosure, the method comprising adding a composition according to the present disclosure to a mold, at a constant temperature from 20 °C to 70 °C, preferably from 30 °C to 60 °C, more preferably from 40 °C to 55 °C, for a period of time from 6 hours (h) to 72 h, preferably from 6 h to 24 h.

In another aspect of the disclosure, there is provided a use of the geopolymer composition according to the present disclosure, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

In another aspect of the disclosure, there is provided a use of the composite according to the present disclosure, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

In another aspect of the disclosure, there is provided a use of the plate according to the present disclosure, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the invention will become apparent to those skilled in the art from this detailed description.

### DETAILED DESCRIPTION OF THE INVENTION

According to some embodiments, the present disclosure provides a geopolymer composition and a composite material comprising a geopolymer wherein the geopolymer comprises a industrial waste. In some embodiments, the industrial waste is a aluminum material waste (such as aluminum sludge, the waste material resulting from aluminum pieces polishing).

The present disclosure provides sustainable composite materials (such as plates, e.g. for insulation).

In some embodiments, a composite material as described herein has improved thermal properties due to the incorporation of the aluminum sludge.

In some embodiments, a composite material as described herein has improved density (lower density) compared to a control composite, due to the incorporation of the aluminum sludge.

According to the present disclosure, a composite material as described herein is characterized by at least one improved property (e.g. mechanical property and/or physical property) as compared to the property for a equivalent composite material (control composite) free of the aluminum sludge. In some embodiments, the at least one property is enhanced by at least 5%, at least 10%, or at least 20%. Each possibility represents a seperate embodiment of the present disclosure.

The present disclosure is based, in part, on the finding that compositions as described herein have the desired properties (such as consistency, porosity and density) to obtain composite materials that can be used as a replacement of conventional construction materials (such as plates comprising a composite material as described herein). Moreover, composite materials as described herein, comprise readly available waste materials (such as aluminum sludge) which reduces the final cost of the material.

According to the present disclosure, the term "aluminum sludge" refers to a byproduct or waste material that is generated during the production or processing of aluminum. According to the present disclosure, it refers to a waste material resulting from aluminum pieces polishing. It is also referred to as "aluminum polishing residue" or "aluminum polishing sludge". When aluminum pieces undergo a polishing process, various abrasive materials, polishing compounds, and lubricants are used to achieve a smooth and shiny surface. Aluminum sludge comprises a high percentage of aluminum metal, along with aluminum oxide, small amounts of other metals, and various impurities. According to the present disclosure, an aluminum sludge as described herein comprises a polymer. Polymers can be present in the form of polishing compounds or as additives in lubricants or cleaning agents used during the polishing process. It should be understood that the specific composition of the polishing sludge will depend on the particular polishing materials and methods employed. Different manufacturers and processes may use different formulations, so the presence of polymers in the sludge can vary.

The technical effect associated is the fact that according to the present disclosure, an aluminum sludge as described herein is re-used leading to a decrease in energy consumption and without gas emissions.

The present disclosure is based, in part, on the finding that a geopolymer as described herein is a sustainable alternative to cement, as it allows the incorporation of an industrial waste (aluminum sludge) and optionally an agro-industrial waste and leads to the reduction of CO₂ emissions.

According to the present disclosure, "geopolymer" refers to a type of inorganic polymer that is formed by the chemical reaction between a source material rich in silica

(SiO₂) and alumina (Al₂O₃) with an alkaline activator. Geopolymer refers to a class of materials that are typically used as a cementitious binder or alternative to conventional Portland cement. Geopolymers are characterized by their three-dimensional network structure, which is formed through the polymerization of the source material and the alkaline activator. The alkaline activator, usually an alkali metal hydroxide or silicate, initiates the reaction by dissolving the silica and alumina, leading to the formation of a stable and hardened structure. The raw materials used in geopolymerization can vary and may include industrial waste materials such as fly ash, slag, or metakaolin, as well as natural minerals like volcanic ash. These materials provide the necessary source of silicon and aluminum to form the geopolymeric network.

According to some embodiments, the present disclosure provides a geopolymer composition comprising fly ash, preferably from biomass, metakaolin, an alkali metal silicate, and an alkali metal hydroxide, and from 2% to 40% weight per weight (w/w), preferably from 2% to 10% (w/w) of an aluminum sludge. In some embodiments, the composition comprises from 2% to 40% (w/w), from 2% to 20% (w/w), or from 2% to 10% (w/w) of an aluminum sludge, including any range therebetween. Each possibility represents a different embodiment of the present disclosure.

The present disclosure is based, in part, on a porous geopolymer, where the use of aluminum sludge is maximized. Aluminum sludge not only generates H₂ that is able to create porosity in the geopolymer, but is also an essential component for the synthesis of the geopolymer given the formation of aluminates. This residue (aluminum sludge) actively contributes to the formation of the material's matrix, which subsequently translates into better mechanical strength. From an environmental point of view, the higher the amount aluminum sludge incorporated in the geopolymer, the lower the ecological footprint since there is a reincorporation of an industrial waste material.

The present disclosure presents an economical and environmentally friendly solution to minimize the use of commercial aluminum powder, given the high incorporated energy of this material. The present disclosure is based, in part, on the fact that with the use of aluminum sludge (an industrial residue), less dense and more resistant geopolymers are obtained.

In some embodiments, the aluminum sludge comprises from 10% to 45% (w/w) of a polymer, preferably a polyester and from 55% to 90% (w/w) of at least one metal, preferably aluminum.

In some embodiments, the the aluminum sludge comprises from 10% to 45% (w/w), from 15% to 45% (w/w), from 20% to 45% (w/w), from 30% to 45% (w/w), from 10% to 40% (w/w), from 15% to 40% (w/w), from 20% to 40% (w/w), or from 30% to 45% (w/w), of a polymer, preferably a polyester, including any range therebetween. Each possibility represents a different embodiment of the present disclosure.

In some embodiments, the the aluminum sludge comprises from 55% to 90% (w/w), from 60% to 90% (w/w), from 55% to 80% (w/w), from 60% to 80% (w/w), from 55% to 70% (w/w), or from 60% to 70% (w/w), of at least one metal, including any range therebetween. Each possibility represents a different embodiment of the present disclosure.

In some embodiments, the the aluminum sludge comprises from 55% to 90% (w/w), from 60% to 90% (w/w), from 55% to 80% (w/w), from 60% to 80% (w/w), from 55% to 70% (w/w), or from 60% to 70% (w/w), of aluminum, including any range therebetween. Each possibility represents a different embodiment of the present disclosure.

According to a thermogravimetric analysis, on a dry basis, the aluminum sludge according to the present disclosure comprises about 37% of a polymer (polyester) and about 63% of metal. A metal as described herein refers to aluminum but it should be understood that aluminum sludge includes other metals (in a low percentage). It should be understood, and it will become apparent to a skilled person in the art, that aluminum sludge according to the present disclosure is a residue, and therefore its composition varies. The present disclosure includes such variations.

In some embodiments, the geopolymer comprises from 10% to 40% (w/w), from 20% to 40% (w/w), from 10% to 30% (w/w), or from 17% to 30% (w/w) of fly ash, including any range therebetween. Each possibility represents a different embodiment of the present disclosure.

In some embodiments, the fly ash according to the present disclosure is fly ash from biomass. The present disclosure is based in part, on the fact that the use of fly ash from biomass increases the use of residues in the composition together with the aluminum sludge. The tecnical effect associated is the reduction of the use of new and raw materials, which leads to a energy save and reduction of gas emissions. In some embodiments, aluminum sludge as described herein, reduced the density of a composite material as described herein.

In some embodiments, the geopolymer comprises from 2% to 20% (w/w), from 5% to 20% (w/w), from 9% to 20% (w/w), or from 10% to 20% (w/w) of metakaolin, including any range therebetween. Each possibility represents a different embodiment of the present disclosure.

In some embodiments, the geopolymer comprises from 5% to 30% (w/w), from 10% to 30% (w/w), or from 12% to 30% (w/w), of an alkali metal silicate, including any range therebetween. Each possibility represents a different embodiment of the present disclosure. In some embodiments, the geopolymer comprises from 15% to 30% (w/w), or from 20% to 30% (w/w) of an alkali metal hydroxide, including any range therebetween. Each possibility represents a different embodiment of the present disclosure. In some embodiments, the alkali metal silicate comprises an alkali metal selected from the group consisting of Na, K, Li, and any combination thereof. In some embodiments, the alkali metal silicate comprises Na. In some embodiments, the alkali metal hydroxide is selected from the group consisting of NaOH, KOH, LiOH, and any combination thereof. In some embodiments, the alkali metal hydroxide is NaOH.

In some embodiments, the geopolymer comprises from 5% to 20% (w/w), from 6% to 20% (w/w), from 5% to 15% (w/w), or from 6% to 15% (w/w) of water, including any range therebetween. Each possibility represents a different embodiment of the present disclosure.

The present disclosure is based, in part, on the finding that the total amount of water in the composition is an important parameter for obtaining a desired fluidity and consistency. In some embodiments, the use of less water is beneficial for the mechanical properties of the resulting composite material and the faster the curing process. However, it should be understood that to determine the amount of water it is necessary to take into account the fluidity that is intended.

In some embodiments, an aluminum sludge as described herein comprises about 49% (w/w) of water. It should be understood, and it will become apparent to a skilled person in the art, that aluminum sludge according to the present disclosure is a residue, and therefore the amount of water in its composition varies.

The present disclosure is based, in part, on the finding that an aluminum sludge as described herein can be used as is, without any processing or drying. The water content in the aluminum sludge is then considered in total water content and therefore discounted in the activating solution accordingly. In some embodiments, instead of sodium silicate solution and sodium hydroxide solution (both aqueous based), it is used sodium hydroxide pellets (solid), to adjust the amount of water.

In some embodiments, the composition further comprises from 5% to 20% (w/w) of a waste material. According to the present disclosure, "waste material" refers to a agricultural waste, plant waste, vegetable waste, or a combination thereof. In some embodiments, waste material refers to a vegetable fiber from agricultural waste, plant waste, vegetable waste, or a combination thereof. The present disclosure is based, in part, on the finding that a waste material as described herein is used in the composition as is, without the need of any pre-treatment, such as processing process, grinding process or crushing process. A waste material as described herein is used untreated. A waste material according to the present disclosure is used as an aggregate in the composition. Non-limiting examples of waste materials according to the present disclosure include rice husk, giant reed fiber, sugarcane, pine, pine needle, straw, moss, flax, coconut fiber, and residues from wood processing. The technical effect associated is the fact that according to the present disclosure, a waste material is re-used leading to a decrease in energy consumption and without gas emissions.

According to some embodiments, the present disclosure provides a composite material comprising a composition as described hereinabove. In some embodiments, the present disclosure provides a composite material comprising a composition, the composition a geopolymer, wherein the geopolymer comprises fly ash, preferably from biomass, metakaolin, an alkali metal silicate, and an alkali metal hydroxide, and from 2% to 40% weight per weight (w/w), preferably from 2% to 10% (w/w) an aluminum sludge. In some embodiments, the fly ash according to the present disclosure is fly ash from biomass.

In some embodiments, the composite material has a thermal conductivity from 0.09 W/mK to 0.2 W/mK. The present disclosure is based, in part, on the finding that a composite material as described herien has a relatively low thermal conductivity when compared to other conventional construction materials, such as wood and ceramic bricks. A composite material as described herein with low conductivity helps to improve thermal insulation.

The present disclosure is based, in part, on the finding that a composite material as described herein comprising a geopolymer comprising aluminum sludge has a lower thermal conductivity when compared to a similar control composite material devoid of aluminum sludge.

In some embodiments, the composite material has a physical density from 0.4 g/cm³ to 0.9 g/cm³. The present disclosure is based, in part, on the finding that a composite material as described herein with a physical density from 0.4 g/cm³ to 0.9 g/cm³, is considered a light material, when compared to other materials suh as a ceramic brick or concrete.

In some embodiments, the composite material has a mechanical resistance from 0.3 MPa to 3 MPa.

According to some embodiments, the present disclosure provides a plate comprising the composite material as described herein.

According to some embodiments, the present disclosure provides a plate comprising the composite material according to the present disclosure, wherein the plate has a length from 305 mm to 295 mm, a width from 305 mm to 295 mm and a thickness from 35 mm to 25. The tecnical effect associated is the fact that a composite material and a plate as described herein, comprise dehydrated geopolymer (dry geopolymer) and are solid. According to the present disclosure, "dehydrated geopolymer" refers to the geopolymer composition devoid of water.

According to some embodiments, the present disclosure provides a method for obtaining a composite as described hereinabove, the method comprising adding a composition as described hereinabove to a mold, at a constant temperature from 20 °C to 70 °C, preferably from 30 °C to 60 °C, more preferably from 40 °C to 55 °C, for a period of time from 6 hours (h) to 72 h, preferably from 6 h to 24 h.

The present disclosure is based in part, on the finding that, low temperatures outside of a range as disclosed herein increase the time needed for the composite material to dry.

The present disclosure is based in part, on the finding that, the time period as desclosed herein is essencial for the composite material reaching a stable weight.

According to some embodiments, the present disclosure provides a use of a composition as described hereinabove, in construction sector, automotive industry, packaging industry, ceramics, or any combination thereof. In some embodiments, the present disclosure provides a use of a composite material as described hereinabove, in coatings. In some embodiments, the coatings are insulating coatings, for basements, overlay roofs, sarking roofs, facades, cavity walls, packages, recipients, or cars.

According to some embodiments, the present disclosure provides a use of a composite material as described hereinabove, in construction sector, automotive industry, packaging industry, ceramics, or any combination thereof. In some embodiments, the present disclosure provides a use of a composite material as described hereinabove, in coatings. In some embodiments, the coatings are insulating coatings, for basements, overlay roofs, sarking roofs, facades, cavity walls, packages, recipients, or cars.

According to some embodiments, the present disclosure provides a use of a plate as described hereinabove, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

As used herein the term "about" refers to ± 10 %.

The terms "comprises", "comprising", "includes", "including", "having" and their conjugates mean "including but not limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure.

Various embodiments and aspects of the present disclosure as delineated hereinabove and as claimed in the claims section below find experimental support in the following examples.

### EXAMPLES

Reference is now made to the following examples, which together with the above descriptions illustrate some embodiments of the disclosure in a non-limiting fashion.

### Materials and methods

### Characterization of materials

### Geopolymer

The material used as a binder in the composite boards in the present study was a geopolymer, which consists of a material that has been considered as a potential substitute for the traditional Portland cement. The geopolymer is a material obtained by the reaction between silica and alumina, present in the precursor materials, which can be natural minerals, fly ash, blast furnace slag, red mud, etc., in an alkaline environment provided by the mixture with the activating materials, which consist of liquid solutions usually composed of sodium or potassium. Availability and cost are determining factors that must be considered when choosing materials for the production of a given geopolymer composition.

The precursor materials of the formulation used in the present work, consist of biomass fly ash, which was obtained from waste from a thermoelectric plant, and metakaolin. The liquid alkaline activators were sodium hydroxide and sodium silicate. In addition, distilled water is used, which is called activation water, which is necessary for the polymerization reaction to occur to produce the solid matrix of the geopolymer.

### Aluminum Sludge (industrial waste)

Material resulting from the automatic polishing of aluminum parts in vats - mixture of aluminum powder and polymer (from the wear of the abrasive elements used in the process). The material comes in sludge which, ultimately, can be used without any kind of pre-processing as long as the water content is known and the activating solution is adjusted accordingly. Without adjusting the indicated geopolymer composition, these must be dried for about 8 hours in an oven at 50°C and subsequently disaggregated.

To obtain the geopolymer, two formulations were developed, represented in Table 1.

**Table 1 - Composition of the geopolymer**

| **Material** | | **Composition 1 (amount in g, for a total geopolymer composition of 2000 g)** |
|---|---|---|
| precursors | Biomass fly ash | 394.4 |
| | Metakaolin | 394.4 |
| activators | sodium silicate | 421.6 |
| | sodium hydroxide | 521.5 |
| | Distilled water | 180.5 |
| | Aluminum sludge | 87.6 |

### Composition and preparation of plates

The preparation consists of obtaining a homogeneous mixture without geopolymer granules, to which a % of aluminum powder and optionally, a % of plant residues are added. After inserting into the 30x30x3 steel mold, it remains in the oven at about 50 degrees until the weight stabilizes. After 24 hours the mold can be removed for more effective drying. These are subjected to mechanical and thermal conductivity tests.

### Thermal conductivity

To determine the thermal conductivity (λ) of the different compositions of plates, after they pass through the drying process at 50 °C, they were submitted to the test using the LM.PLUS 305 heat flow meter equipment according to the ISO 8301 (1991) standard. The assay was repeated three times for each plate, in order to obtain an average value for each composition. The equipment contains a cooling plate at the bottom and a heating plate at the top. The temperature of the cooling plate set for this test was 10°C and the heating plate was 40°C. With the defined temperatures, the equipment works for an average of 120 minutes until a stable value of the thermal conductivity coefficient is obtained.

### EXAMPLE 1

### DENSITY AND THERMAL CONDUCTIVITY

The plates that met the conditions to proceed with the tests, were submitted to a thermal conductivity test and density measurements. Table 2 present the results of a composition tested.

**Table 2 - Density and thermal conductivity of geopolymer (GP) plates comprising aluminum sludge**

| **Composition No.** | **GP (g)** | **Density (g/cm³)** | **Thermal conductivity (W/mK)** |
|---|---|---|---|
| 1 | 2500 | 0.70 | 0.10318 |

It was observed that plates comprising geopolymer without aluminum sludge needed a larger amount of material (from 5000g, to fill the mold). This is due to the fact that, according to the present disclosure aluminum sludge behaves as a pore-forming agent, therefore with the formation of pores, a smaller amount of geopolymer and aluminum is needed to fill the same mold. The present disclosure is based, in part, on the finding that plates as described herein comprising a geopolymer comprising aluminum sludge, lead to plates with lower density compared to similar plates comprising a control geopolymer devoid of aluminum sludge.

With increasing density of the plates, it is expected that conductivity values will also increase.

It was found that for plates comprising only geopolymer (devoid of aluminum sludge), the density values vary from 1.2 to 1.5 g/cm³ and the thermal conductivity values from 0.24 to 0.33 W/mK.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. Geopolymer composition comprising fly ash, metakaolin, an alkali metal silicate, an alkali metal hydroxide, and from 2% to 40% weight per weight (w/w), preferably from 2% to 10% (w/w) of an aluminum sludge, wherein said fly ash is preferably from biomass.

2. Geopolymer composition according to claim 1, wherein said aluminum sludge comprises from 10% to 45% (w/w) of a polymer, preferably a polyester and from 55% to 90% (w/w) of aluminum.

3. Geopolymer composition according to any one of claims 1 to 2, comprising from 10% to 40% (w/w), preferably from 10% to 30% (w/w) of said fly ash, from 2% to 20% (w/w), preferably from 10% to 20% (w/w) of said metakaolin; from 5% to 30% (w/w), preferably from 10% to 30% (w/w) of said alkali metal silicate; and from 15% to 30% (w/w), preferably from 20% to 30% (w/w) of said alkali metal hydroxide.

4. Geopolymer composition according to any one of claims 1 to 3 comprising from 5% to 20% (w/w), preferably from 6% to 15% (w/w) of water.

5. Geopolymer composition according to any one of claims 1 to 4, wherein said alkali metal silicate comprises an alkali metal selected from the group consisting of Na, K, Li, and any combination thereof, preferably Na, and said alkali metal hydroxide is selected from the group consisting of NaOH, KOH, LiOH, and any combination thereof, preferably NaOH.

6. Geopolymer composition according to any one of claims 1 to 5, further comprising from 5% to 20% (w/w) of a waste material, wherein said waste material comprises rice husk, giant reed fiber, sugarcane, pine, pine needle, straw, moss, flax, coconut fiber, residues from wood processing, or any combination thereof.

7. Composite material comprising the geopolymer composition according to any one of claims 1 to 6, wherein the geopolymer composition is a dehydrated geopolymer composition.

8. Composite material according to claim 7, wherein said composite material has a porosity from 20% to 50% of the total volume.

9. Composite material according to any one of claims 7 to 8, having a thermal conductivity from 0.09 W/mK to 0.2 W/mK.

10. Composite material according to any one of claims 7 to 9, having a physical density from 0.4 g/cm³ to 0.9 g/cm³.

11. Plate comprising the composite material according to any one of claims 7 to 10, wherein said plate has a length from 305 mm to 295 mm, a width from 305 mm to 295 mm and a thickness from 3.5 mm to 2.5 mm.

12. Method for obtaining a composite according to any one of claims 7 to 10, the method comprising adding a geopolymer composition according to any one claims 1 to 6 to a mold, at a constant temperature from 20 °C to 70 °C, preferably from 30 °C to 60 °C, more preferably from 40 °C to 55 °C, for a period of time from 6 hours (h) to 72 h, preferably from 6 h to 24 h.

13. Use of the geopolymer composition according to any one of claims 1 to 6, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

14. Use of the composite material according to any one of claims 7 to 10, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

15. Use of the plate according to claim 11, in construction sector, automotive industry, packaging industry, ceramics, or any combination thereof, preferably in coatings, more preferably insulating coatings, for basements, overlay roofs, sarking roofs, facades, cavity walls, packages, recipients, or cars.
